# EUROPÄISCHE PATENTANMELDUNG

(11) **EP 4 674 902 A1**
(43) Veröffentlichungstag der Anmeldung: **07.01.2026**
(21) Anmeldenummer: 24186281.2
(22) Anmeldetag: 03.07.2024
(51) Int. Cl.: C08J 11/08

(54) **VERFAHREN ZUM RECYCLING EINES POLYKONDENSATS SOWIE RECYCLIERTES POLYKONDENSAT**

(71) Anmelder: Fraunhofer-Gesellschaft zur Förderung der angewandten Forschung e.V., 80686 München (DE)
(72) Erfinder: WENDE, Maximilian, 85354 Freising (DE); MÄURER, Andreas, 85354 Freising (DE); FELL, Tanja, 85354 Freising (DE); KNAPPICH, Fabian, 85354 Freising (DE); SCHLUMMER, Martin, 85354 Freising (DE)
(74) Vertreter: Pfenning, Meinig & Partner mbB

(57) **Zusammenfassung**

Die vorliegende Erfindung betrifft ein Verfahren zum Recycling eines Polykondensats aus der Gruppe der Polyester, Polyamide, Polylactide und Polycarbonate sowie ein recycliertes Polykondensat, wobei während des Recylingverfahrens ein Aufbau des Molekulargewichts des Polykondensats erfolgt.

## Beschreibung

Die vorliegende Erfindung betrifft ein Verfahren zum Recycling eines Polykondensats aus der Gruppe der Polyester, Polyamide, Polylactide und Polycarbonate sowie ein recycliertes Polykondensat, wobei während des Recylingverfahrens ein Aufbau des Molekulargewichts des Polykondensats erfolgt.

Polykondensate wie Polyester, insbesondere Polyethylenterephthalat (PET) und Polybutylenterephthalat (PBT), Polyamide (PA), Polylactide (PLA) und Polycarbonate (PC) werden während ihrer Einsatzdauer durch Umwelteinflüsse teils stark beansprucht und unterliegen oft einem Abbau des Molekulargewichts. Dieser kann auch insbesondere während des werkstofflichen Recyclingprozesses bspw. beim erneuten Einschmelzen des Polymers durch eine hohe thermische Belastung erfolgen. Dadurch kann das ursprüngliche Eigenschaftsprofil des Polykondensats nicht erreicht werden und eine Kreislaufführung ist nicht möglich.

Im Falle von PET gibt es bereits verschiedene Lösungen, das Molekulargewicht gezielt einzustellen. So haben einzelne Hersteller von Recyclinganlagen eine Festphasen-Polykondensation (engl. Solid State Polycondensation, SSP) bzw. eine Flüssigphasen-Polykondensation ihrem Prozess nachgeschaltet.

Bei der Festphasennachkondensation wird ein Granulat getrocknet und aufgeheizt und anschließend im Vakuum oder in einem Gasstrom bei Temperaturen von 200 bis 225 °C polykondensiert. Vakuum oder Gasstrom werden für den Reaktionsfortschritt benötigt, um die entstehenden Nebenprodukte (Ethylenglykol, Wasser sowie andere leicht flüchtige, organische Stoffe) abzuführen.

In der US 5,292,865 sind wesentliche Elemente eines Verfahrens mit Schmelzepolykondensation und Dealdehydisierung beschrieben. Die Behandlung mit trockener Luft und ein sich dabei einstellender Viskositätsanstieg bei 170 bis 185°C bei einer Behandlungszeit von 10 bis 12 Stunden sind festgehalten. Bekanntermaßen setzt die Festphasennachkondensation in einem Gasstrom spürbar erst ab ca. 180 °C ein, wo jedoch bei Verwendung von Luft bereits mit einer beginnenden oxidativen Schädigung zu rechnen ist. Bei niedrigeren Temperaturen (ca. 160°C) könnte mit entsprechend langen Reaktionszeiten eine Feststoffkondensation auch mit Luft durchgeführt werden.

Die EP 2 433 771 B1 beschreibt ein Verfahren zur Erhöhung des Molekulargewichts bei mehr als 170°C in einer Granulatschüttung unter kontinuierlichem Gasstrom für 1 bis 30 Stunden.

Des Weiteren besteht die Möglichkeit Kettenverlängerer einzusetzen, die durch eine Reaktion mit den Endgruppen von PET einen Aufbau des Molekulargewichts erreichen. Diese Lösungen sind insbesondere für die Anpassung des Molekulargewichts nach einem thermo-mechanischen Recyclingprozess geeignet.

In einem physikalischen-lösungsmittelbasierten Recyclingverfahren hätten diese Lösungen den Nachteil, dass entweder ein zusätzlicher Prozessschritt oder die Zugabe von Additiven erforderlich wäre. Eine Anwendung würde in beiden Fällen zu höheren Prozesskosten führen.

Für PA ist eine Festphasen-Polykondensation deutlich weniger verbreitet als für PET. Dennoch gibt es auch hier bereits industrielle Prozesse, die die SSP auf PA6 und PA6.6 anwenden. Das Patent EP 0 838 488 B1 beschreibt eine SSP von Polyamiden 10-40 K unterhalb der Schmelztemperatur unter Inertgas in einem Fließbettrektor. Auch für Polyamide gibt es die Möglichkeit das Molekulargewicht mittels Kettenverlängerer nachträglich zu erhöhen.

Es sind bislang allerdings keine Verfahren aus dem Stand der Technik bekannt, in denen die Polykondensation aus einer Lösung heraus bzw. in einem lösemittelhaltigen Polyamid beschrieben wird.

Für Polycarbonate wurde in der Literatur bislang wenig über Polykondensattion berichtet und es im Bereich der Polycarbonate kein industriell angewandter SSP Prozess. In wissenschaftlichen Publikationen wurde eine Festphasenkondensation nur vom Prepolymer ausgehend durchgeführt und der Einfluss von superkritischen CO₂ auf die SSP von Polycarbonat untersucht (Jaehoon Kim, 1. G., (2018) Effect of Prepolymer Molecular Weight on Solid State Vol. 46. Journal of Polymer Science: Part A: Polymer Chemistry, S. 4959-4969 und M. Villalobos, A. A. (2006), Oligomeric chain extenders for economic reprocessing and recycling of condensation plastics. Energy 31, S. 3227-3234 und Martino Colonna, M. F. (2015), Solid State Polymerization of Bisphenol A Polycarbonate:. Polymer Engineering and Science, S. 1024-1029). Auch für Polycarbonat können Kettenverlängerer zum Aufbau des Molekulargewichts eingesetzt werden (Tuna, B. (2023), Reactive Extrusion of Recycled Polycarbonate Using Chain Extenders. Russian Journal of Physical Chemistry Vol. 17, No. 1, S. 196-205).

Die SSP von PLA wird bereits in der Literatur beschrieben (S.-I. Moon, C.-W. L. (2001), Melt/solid polycondensation of 1-lactic acid: an alternative route to poly(I-lactic acid) with high molecular weight. Polymer 42, S. 5059-5062).

Industriell wird die SSP von PLA im Gegensatz zu PA und PET nicht eingesetzt. Es ist keine Veröffentlichung bekannt in der die SSP von PLA mit Zusatz von Lösemitteln beschrieben wird. Auch zu PLA gibt es Veröffentlichungen, die den Einsatz von Kettenverlängerern beschreiben (Qingkai Meng, M.-C. H. (2012). Control of thermal degradation of polylactide/clay nanocomposites during melt processing by chain extension reaction. Polymer Degradation and Stability 97, S. 2010-2020 und M. Villalobos, A. A. (2006). Oligomeric chain extenders for economic reprocessing and recycling of condensation plastics. Energy 31, S. 3227-3234).

In der DE 10 2013 210 110 A1 wurde ein Löseprozess zum PLA Recycling bereits beschrieben, hier wurde auch erwähnt, dass ein Wassergehalt von über 1% zu vermeiden ist, um einen Abbau des Molekulargewichts zu vermeiden.

Ausgehend hiervon war es Aufgabe der vorliegenden Erfindung, ein RecyclingVerfahren bereitzustellen, das es ermöglicht, dass einen Molekulargewichtsaufbau beim Recycling-Prozess ermöglicht.

Diese Aufgabe wird durch das Verfahren zum Recycling von Polykondensaten mit den Merkmalen des Anspruchs 1 und das recyclierte Polykondensat mit den Merkmalen des Anspruchs 12 gelöst. Die weiteren Ansprüche nennen bevorzugte Ausführungsformen.

Erfindungsgemäß wird ein Verfahren zum Recycling von Polykondensaten aus der Gruppe der Polyester, Polyamide, Polylactide und Polycarbonate bereitgestellt, das folgende Schritte umfasst:
a) Bereitstellen von polymerhaltigem Abfall enthaltend mindestens ein Polykondensat als zu recyclierendes Zielpolymer mit mindestens einem Lösungsmittel,
b) Partielles oder vollständiges Lösen des zumindest einen Polykondensats in mindestens einem Lösungsmittel,
c) Mechanische Abtrennung von mindestens 30 Gew.-%, bevorzugt mindestens 60 Gew.-%, besonders bevorzugt mindestens 90 Gew.-% der nicht gelösten Bestandteilen mit einer Partikelgröße von mindestens 100 µm von dem gelösten Anteil des mindestens einen Polykondensats, und
d) Trocknung des zumindest einen Polykondensats aus Schritt b) unter gleichzeitiger Erhöhung des Molekulargewichts um mindestens 1 %, bevorzugt mindestens 5%, besonders bevorzugt um mindestens 10%.

Gemäß dem erfindungsgemäßen Verfahren können Polykondensate insbesondere aus Polymer-haltigen Abfall selektiv extrahiert und unter Einsatz von Lösemitteln bei erhöhter Temperatur unter Vakuum bzw. Inertgasatmosphäre aufkondensiert werden. Gleichzeitig wird das verwendete Lösemittel aus dem Polykondensat entfernt.

Das Polykondensat kann zu Beginn des Verfahrens in Lösung sein und durch die destillative Abtrennung des Lösemittels den Zustand eines Pulver annehmen. Dieser Zustand kann auch vor der destillativen Abtrennung des Lösemittels durch die Fällung mit einem Fällmittel erreicht werden. Besonders effektiv ist die Aufkondensation des Polykondensats, wenn das Polymer als Pulver aus der Lösung gefällt wurde. Dies kann durch Einsatz eines Fällmittels oder Verringerung der Temperatur unterhalb der Schmelztemperatur des Polykondensats erfolgen. Des Weiteren kann das Polykondensat durch destillative Abtrennung des Lösemittels unterhalb der Schmelztemperatur des Polykondensats als Pulver ausgefällt werden. Das Fällmittel kann in diesem Fall ein Kohlenwasserstoff oder Wasser sein. Der Einsatz von Wasser führt dabei zu einer schonenderen Trocknung des gefällten Polykondensats aufgrund milderer notwendiger Prozessbedingungen. Das enthaltende Wasser kann zudem als Stripmittel für Restlösemittelanteile fungieren. Es wird festgestellt, dass auch bei Einsatz von Wasser als Fällmittel eine Aufkondensation des Polymers erreicht wird. Bislang ist bekannt, das nur geringe Mengen an Wasser beim Recycling oder der Verarbeitung die Hydrolyse begünstigen und ein Abbau des Molekulargewichts des Polymers auftritt.

Das Verfahren kann auf alle Polykondensate angewandt werden und eignet sich insbesondere für die Aufkondensation von Polyester wie z.B. PET und PBT, Polyamid, Polylactid und Polycarbonaten.

Der wichtigste Vorteil des erfindungsgemäßen Verfahrens ist die Verringerung der im Vergleich zur üblichen SSP benötigten Temperatur durch den Einsatz eines Lösemittels. Weiter ist das erfindungsgemäße Verfahren sehr vorteilhaft beim lösemittelbasierten Recycling von Polykondensaten aus Polymer-haltigen Abfällen, da hier die direkte Aufkondensation mit gezielter Einstellung des Molekulargewichts während der Trocknung der Polymerlösung bzw. eines gefällten Polymers möglich ist. Dadurch entfällt die sonst notwendige SSP im Anschluss an das Recyclingverfahren. Dies stellt einen großen ökonomischen und ökologischen Vorteil durch Wegfall von ansonsten notwendiger Aggregate und zusätzlichen Energiekosten dar. Außerdem bewirkt die Fällung des Polymers als Pulver deutlich kürzere Diffusionswege und eine effektivere Trocknung sowie eine bessere Abtrennung der Kondensationsprodukte, wodurch auch die Aufkondensation effektiver wird. Der Einsatz von Wasser als Fällmittel weist zudem den Vorteil milderer Trocknungsbedingungen auf.

Eine bevorzugte Ausführungsform sieht vor, dass nach Schritt c) und vor Schritt d) folgende zusätzliche Schritte durchgeführt werden:
- Fällen des mindestens einen Polykondensats aus der Lösung mit mindestens einem Fällmittel,
- Mechanische Trennung des gefällten mindestens einen Polykondensats von der Lösung.

Dabei ist es bevorzugt, dass der Lösungsmittelgehalt in dem mindestens einen Polykondensat um mindestens 30%, besonders bevorzugt um mindestens 50%, und ganz besonders bevorzugt um 60 bis 99% bezogen auf den Lösungsmittelgehalt in der Lösung erniedrigt ist.

Es ist bevorzugt, dass
- das Polykondensat ein Polyester ist, wobei das mindestens eine Lösungsmittel einen Wert für die Wasserstoff-Bindungsstärke δ_{H} des Hansen-Löslichkeitsparameters von 2 bis 15 MPa^{0.5}, bevorzugt von 3 bis 13 MPa^{0.5} , besonders bevorzugt von 4 bis 10 MPa^{0.5} und/oder einen Wert für die polare Bindungsstärke δ_{P} des Hansen-Löslichkeits-Parameters von 1 bis 14 MPa^{0.5}, bevorzugt von 2 bis 12 MPa^{0.5}, besonders bevorzugt von 3 bis 10 MPa^{0.5} und/oder einen Wert für die dispersiven Wechselwirkungen δ_{D} von 10 bis 25 MPa^{0.5}, bevorzugt von 12 bis 24 MPa^{0.5} , besonders bevorzugt von 13 bis 22 MPa^{0.5} aufweist,
- das Polykondensat ein Polyamid ist, wobei das mindestens eine Lösungsmittel einen Wert für die Wasserstoff-Bindungsstärke δ_{H} des Hansen-Löslichkeitsparameters von 5 bis 20 MPa^{0.5}, bevorzugt von 6 bis 19 MPa^{0.5} , besonders bevorzugt von 8 bis 19 MPa^{0.5} und/oder einen Wert für die polare Bindungsstärke δ_{P} des Hansen-Löslichkeits-Parameters von 0,5 bis 15 MPa^{0.5}, bevorzugt von 1 bis 14 MPa^{0.5}, besonders bevorzugt von 1,5 bis13 MPa^{0.5} und/oder einen Wert für die dispersiven Wechselwirkungen δ_{D} von12 bis 22 MPa^{0.5}, bevorzugt von 13 bis 20 MPa^{0.5}, besonders bevorzugt von 14 bis 19 MPa^{0.5} aufweist und/oder
- das Polykondensat ein Polycarbonat ist, wobei das mindestens eine Lösungsmittel einen Wert für die Wasserstoff-Bindungsstärke δ_{H} des Hansen-Löslichkeitsparameters von 2 bis15 MPa^{0.5}, bevorzugt von 3 bis13 MPa^{0.5} , besonders bevorzugt von 4 bis 10 MPa^{0.5} und/oder einen Wert für die polare Bindungsstärke δ_{P} des Hansen-Löslichkeits-Parameters von 1 bis 14 MPa^{0.5}, bevorzugt von 2 bis12 MPa^{0.5}, besonders bevorzugt von3 bis 11 MPa^{0.5} und/oder einen Wert für die dispersiven Wechselwirkungen δ_{D} von 14 bis 25 MPa^{0.5}, bevorzugt von 15 bis24 MPa^{0.5}, besonders bevorzugt von 16 bis22 MPa^{0.5} aufweist und/oder
- das Polykondensat ein Polylactid ist, wobei das mindestens eine Lösungsmittel einen Wert für die Wasserstoff-Bindungsstärke δ_{H} des Hansen-Löslichkeitsparameters von 2 bis 15 MPa^{0.5}, bevorzugt von 3 bis13 MPa^{0.5} , besonders bevorzugt von 3,5 bis 10 MPa^{0.5} und/oder einen Wert für die polare Bindungsstärke δ_{P} des Hansen-Löslichkeits-Parameters von3 bis 25MPa^{0.5}, bevorzugt von 5 bis 22 MPa^{0.5}, besonders bevorzugt von 7 bis 20 MPa^{0.5} und/oder einen Wert für die dispersiven Wechselwirkungen δ_{D} von 14 bis 25 MPa^{0.5}, bevorzugt von 15 bis14 MPa^{0.5}, besonders bevorzugt von 16 bis 22 MPa^{0.5} aufweist.

Eine bevorzugte Ausführungsform sieht vor, dass das mindestens eine Lösungsmittel mindestens ein Dicarbonsäuredialkylester ist, insbesondere ein Dialkylester, bevorzugt Dimethylester oder Diethylester von Säuren ausgewählt aus der Gruppe bestehend aus Oxalsäure, Malonsäure, Bernsteinsäure, Glutarsäure, Adipinsäure und Mischungen hiervon oder Benzylalkohol, Benzaldehyd, Dimethylsulfoxid und Dimethylformamid sowie Mischungen hiervon.

Es ist bevorzugt, dass das mindestens eine Fällmittel ausgewählt ist aus der Gruppe bestehend aus C₅-C₁₇-Kohlenwasserstoffen, bevorzugt technische Alkangemische aus C₁₀-C₁₄-Kohlenwasserstoffen, Wasser und Mischungen hiervon.

Eine bevorzugte Ausführungsform sieht vor, dass das mindestens eine Lösungsmittel eine sich vom mindestens einen Fällmittel unterscheidende Hansen-Parameter aufweist.

Es ist weiter bevorzugt, dass
- das Polykondensat ein Polyester ist und das Verhältnis von Lösungsmittelmenge zu Fällmittelmenge im Bereich von 1:0,02 bis 1:1, bevorzugt im Bereich von 1:0,03 bis 1:0,5, besonders bevorzugt im Bereich von 1:0,05 bis 1:0,2 liegt, und/oder
- das Polykondensat ein Polyamid ist und das Verhältnis von Lösungsmittelmenge zu Fällmittelmenge im Bereich von 1:0,05 bis 1:2 bevorzugt im Bereich von 1:0,07 bis 1:1,25, besonders bevorzugt im Bereich von 1:0,1 bis 1:0,75 liegt und/oder
- das Polykondensat ein Polylactid ist und das Verhältnis von Lösungsmittelmenge zu Fällmittelmenge im Bereich von 1:0,1 bis 1:5, bevorzugt im Bereich von 1:0,25 bis 1:2,5, besonders bevorzugt im Bereich von 1:0,5 bis 1:1,5 liegt und/oder
- das Polykondensat ein Polycarbonat ist und das Verhältnis von Lösungsmittelmenge zu Fällmittelmenge im Bereich von 1:0,1 bis 1:3, bevorzugt im Bereich von 1:0,25 bis 1:2, besonders bevorzugt im Bereich von 1:0,5 bis 1:1,25 liegt.

Vorzugsweise weisen das mindestens eine Lösungsmittel und das mindestens eine Fällmittel eine Mischungslücke auf.

Es ist bevorzugt, dass nach Schritt b) der Lösungsmittelgehalt in dem mindestens einen Polykondensat um mind. 0,1 %, besonders bevorzugt um mindestens 1% erhöht ist.

Vorzugsweise erfolgt die mechanische Trennung durch Sedimentieren und/oder Filtrieren und/oder Siebung und/oder Windsichtung.

Es ist bevorzugt, dass die Trocknung bei einer Temperatur von 150 bis 250 °C, bevorzugt von 160 bis 220 °C, besonders bevorzugt von 170 bis 200°C durchgeführt wird.

Die Trocknung wird vorzugsweise für einen Zeitraum von 30 bis 600 Minuten, bevorzugt von 45 bis 450 Minuten, besonders bevorzugt von 60 bis 360 Minuten durchgeführt.

Weiter ist es bevorzugt, dass die Trocknung des zumindest einen Polykondensats unter Vakuum, bevorzugt bei einem Druck von ≤ 500 mbar, bevorzugter ≤ 100 mbar besonders bevorzugt von 1 bis 50 mbar, und/oder unter Zugabe mindestens eines Inertgases erfolgt, wobei bevorzugt das Vakuum nur zeitweise und/oder mehrmals angelegt und/oder die Zugabe des mindestens einen Inertgases nur zeitweise und/oder mehrmals erfolgt.

Das mindestens eine Inertgas ist vorzugsweise ausgewählt aus der Gruppe bestehend aus Stickstoff, Argon, Luft, Kohlenstoffdioxid oder Mischungen hiervon.

Eine bevorzugte Ausführungsform sieht vor, dass die Lösungsmittelrückstände und Fällmittelrückstände des mindestens einen Polykondensats während der Trocknung auf einen Gehalt von unter 5 % reduziert werden, bevorzugt unter 1 %, besonders bevorzugt unter 0,1 %.

Es ist bevorzugt, dass das Molekulargewicht des zumindest einen Polykondensats um 5 bis 90%, bevorzugt um 10 bis 80%, bezogen jeweils auf das Molekulargewicht des jeweiligen Polykondensats im polymerhaltigen Abfall, erhöht wird.

Erfindungsgemäß wird auch ein recycliertes Polykondensat mit einem Molekulargewicht von 80 % bis 120 % des Molekulargewichts eines Virgin-Polykondensats bereitgestellt, wobei das Polykondensat als Pulver mit einer mittleren Teilchengröße von 20 µm bis 1000 µm, bestimmt nach DIN 66165, vorliegt und das recyclierte Polykondensat einen Lösungsmittelgehalt von maximal 5000 µg/g aufweist.

Das Produkt dieses Verfahrens ist ein reines Polykondensat mit spezifisch eingestelltem Molekulargewicht, die entweder für die das ursprüngliche Anwendungsspektrum anwendbar sind.

Es ist bevorzugt, dass das recyclierte Polykondensat ein Molekulargewicht von 95 % bis 105 %, des Molekulargewichts eines Virgin-Polykondensats und/oder das Polykondensat als Pulver mit einer mittleren Teilchengröße 50 bis 750 µm bestimmt nach DIN 66165,vorliegt.

Es ist bevorzugt, dass das recyclierte Polykondensat einen Lösungsmittelgehalt von maximal 1000 µg/g und besonders bevorzugt von 10 bis 500µg/g aufweist.

Weiter ist es bevorzugt, dass das recyclierte Polykondensat als Pulver mit einer mittleren Teilchengröße von 50 µm bis 500 µm, bestimmt nach DIN 66165, vorliegt.

Das recyclierte Polykondensat ist bevorzugt herstellbar nach dem zuvor beschriebenen Verfahren gemäß den Ansprüchen 1 bis 16.

Anhand der nachfolgenden Beispiele und Figuren soll der erfindungsgemäße Gegenstand näher erläutert werden, ohne diesen auf die hier gezeigten spezifischen Ausführungsformen einschränken zu wollen.

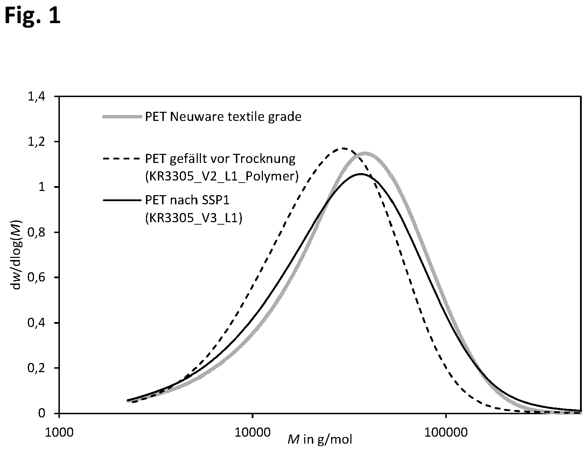

- Fig. 1: zeigt ein Gelpermeationschromatographie (GPC)-Spektrum von erfindungsgemäß recycliertem PET vor und nach Trocknung im Vergleich zu PET-Neuware

### Beispiel 1

Aus einem polyesterhaltigen Textilabfall wird PET selektiv in einem Dicarbonsäuredialkylestergemisch bei über 150°C gelöst. Anschließend werden Feststoffe aus der PET-Lösung durch Filtration entfernt. Die nun erhaltene reine Lösung wird mit einem technischen Alkangemisch bei über 100°C gefällt und das gefällte PET von der Flüssigkeit abgetrennt. Das PET wird nun bei 150 °C für 6 Stunden bei einem Druck von 60 mbar und intervallartigen Austausch der Atmoshphäre mit Stickstoff getrocknet. Dabei wird der Löse- bzw. Fällmittelgehalt des PET von 85 % auf 0,1 % verringert und das gewichtsmittlere Molekulargewicht Mw von 40000 g/mol auf 44000 g/mol gesteigert. Bei höheren Temperaturen konnte der Aufbau weiter gesteigert werden (siehe Tab. 1).Ein Vergleich mit der Literatur zeigt hier sowohl zeitlich, als auch von der nötigen Temperatur einen klaren Vorteil. Beispielsweise wird in EP 2 433 771 B1 eine Versuchsreihe beschrieben, in der unterhalb von 180 °C kein Aufbau des Molekulargewichts erzielt wurde und Messungen bei SSP Temperaturen ab 180 °C erst nach 12 h thermischer Behandlung durchgeführt wurden und einen Aufbau zeigten.

Das hier beschriebene Verfahren zeigt also eine klare Zeit- und Energieersparnis.

Tab.1 zeigt den Vergleich der erhaltenen Molekulargewichte nach unterschiedlichen Trocknungsbedingungen.

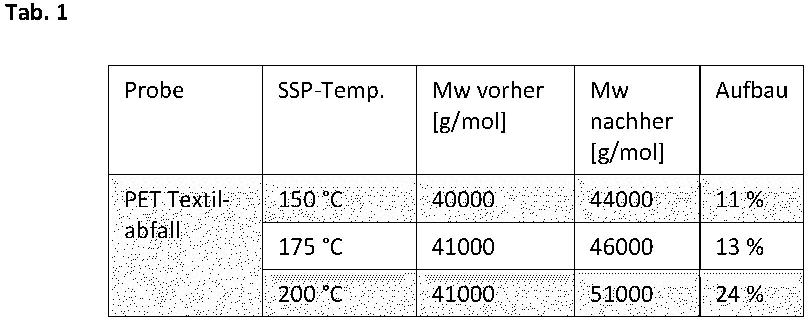

### Beispiel 2

Aus einem polyesterhaltigen post-consumer Textilabfall wird PET selektiv in einem Dicarbonsäuredialkylestergemisch bei über 150°C gelöst. Anschließend werden Feststoffe aus der PET-Lösung durch Filtration entfernt. Die nun erhaltene reine Lösung wird mit einem technischen Alkangemisch bei über 100°C gefällt und das gefällte PET von der Flüssigkeit abgetrennt. Das PET wird nun bei 200 °C für 6 Stunden bei einem Druck von 60 mbar und intervallartigen Austausch der Atmoshphäre mit Stickstoff getrocknet. Dabei wird der Löse- bzw. Fällmittelgehalt des PET von 89 % auf 0,1 % verringert und das gewichtsmittlere Molekulargewicht Mw von 32000 g/mol auf 46000 g/mol gesteigert. Die Ergebnisse der GPC in Fig. 1 zeigen außerdem eine Verschiebung der Verteilung des Molekulargewichts hin zu längeren Ketten. Am Ende des Prozesses kann eine sehr ähnliche Verteilung wie die von Neuware erreicht werden.

### Beispiel 3

Aus einem polyesterhaltigen Textilabfall wird PET selektiv in einem Dicarbonsäuredialkylestergemisch bei über 150°C gelöst. Anschließend werden Feststoffe aus der PET-Lösung durch Filtration entfernt. Die nun erhaltene reine Lösung wird mit einem technischen Alkangemisch bei über 100°C gefällt und das gefällte PET von der Flüssigkeit abgetrennt. Das PET wird nun bei 200 °C für 1 Stunde bei einem Druck von 60 mbar getrocknet. Dabei wird der Löse- bzw. Fällmittelgehalt des PET von 85 % auf 0,1 % verringert und das gewichtsmittlere Molekulargewicht Mw von 32000 g/mol auf 38000 g/mol gesteigert. Das hier beschriebene Verfahren zeigt also eine klare Zeit- und damit Energieersparnis.

### Beispiel 4

Aus einem PA6.6 haltigen Automotiveabfall wird PA6.6 selektiv in Benzylalkohol bei über 120°C gelöst. Anschließend werden Feststoffe aus der PA6.6-Lösung durch Filtration entfernt. Die nun erhaltene reine Lösung kann mit einem technischen Alkangemisch bei über 60°C gefällt und das gefällte PA6.6 von der Flüssigkeit abgetrennt werden. Das PA6.6 wird nun bei 175 °C für 6 Stunden bei einem Druck von 60 mbar und intervallartigen Austausch der Atmosphäre mit Stickstoff getrocknet. Dabei wird der Löse- bzw. Fällmittelgehalt des PA6.6 von 85 % auf 0,1 % verringert und das gewichtsmittlere Molekulargewicht Mw von 41000 g/mol auf 48000 g/mol gesteigert. Alternativ kann das PA6.6 aus der gereinigten Lösung auch direkt, ohne Einsatz von Fällmitteln getrocknet werden. Hier ist ein Aufbau von 37000 g/mol auf 45000 g/mol bei selbigen Trocknungsbedingungen beobachtet worden. Das hier beschriebene Verfahren zeigt also eine klare Zeit- und damit Energieersparnis.

Tab. 2 zeigt den Aufbau des Molekulargewichts von PA6.6 bei unterschiedlichen Trocknungsbedingungen. Bei allen Experimenten wurde die Atmosphäre alle 30 min mit Stockstoff ausgetauscht.

**Tab. 2**

| Trocknungs/SSP-Bedingungen | Mw vorher / Mw nachher (g/mol) | | | |
|---|---|---|---|---|
| | ohne Einsatz eines Fällmittels | | unter Einsatz eines Fällmittels | |
| 150 °C, 6 h | 41000 | 45000 | 37000 | 40000 |
| 175 °C, 6 h | 41000 | 48000 | 37000 | 45000 |
| 200 °C, 6 h | 41000 | 84000 | 37000 | 62000 |

### Beispiel 5

Aus einem PA6 haltigen Automotiveabfall wird PA6 selektiv in Benzylalkohol bei über 100°C gelöst. Anschließend werden Feststoffe aus der PA6-Lösung durch Filtration entfernt. Die nun erhaltene reine Lösung wird nun bei 200 °C für 6 Stunden bei einem Druck von 60 mbar und intervallartigen Austausch der Atmoshphäre mit Stickstoff getrocknet. Dabei wird der Löse- bzw. Fällmittelgehalt des PA6 von 95 % auf 0,1 % verringert und das gewichtsmittlere Molekulargewicht Mw von 42000 g/mol auf 84000 g/mol gesteigert.

### Beispiel 6

Polycarbonat wird aus einem Abfallstrom in einem Dicarbonsäuredialkylestergemisch bei über 130°C gelöst. Anschließend werden Feststoffe aus der PC-Lösung durch Filtration entfernt. Das PC wird dann mittels eines technischen Alkangemischs bei >100 °C gefällt. Das gefällte Pulver wird nun bei 160 °C für 6 h bei 60 mbar und intervallartigen Austausch der Atmosphäre mit Stickstoff getrocknet. Sowohl die Molekulargewichte des Inputs als auch des Produkts wurden gemessen und es wurde ein Aufbau von 40000 g/mol auf 49000 g/mol beobachtet.

## Patentansprüche

1. Verfahren zum Recycling von Polykondensaten aus der Gruppe der Polyester, Polyamide, Polylactide und Polycarbonate mit den folgenden Schritten:
a) Bereitstellen von polymerhaltigem Abfall enthaltend mindestens ein Polykondensat als zu recyclierendes Zielpolymer mit mindestens einem Lösungsmittel,
b) Partielles oder vollständiges Lösen des zumindest einen Polykondensats in mindestens einem Lösungsmittel,
c) Mechanische Abtrennung von mindestens 30 Gew.-% der nicht gelösten Bestandteilen mit einer Partikelgröße von mindestens 100 µm von dem gelösten Anteil des mindestens einen Polykondensats,
d) Trocknung des zumindest einen Polykondensats aus Schritt b) unter gleichzeitiger Erhöhung des Molekulargewichts um mindestens 1 %.

2. Verfahren nach Anspruch 1,
**dadurch gekennzeichnet, dass** nach Schritt c) und vor Schritt d) folgende zusätzliche Schritte durchgeführt werden:
• Fällen des mindestens einen Polykondensats aus der Lösung mit mindestens einem Fällmittel,
• Mechanische Trennung des gefällten mindestens einen Polykondensats von der Lösung,
wobei der Lösungsmittelgehalt in dem mindestens einen Polykondensat bevorzugt um mindestens 30%, besonders bevorzugt um mindestens 50%, und ganz besonders bevorzugt um 60 bis 99% bezogen auf den Lösungsmittelgehalt in der Lösung erniedrigt ist.

3. Verfahren nach einem der vorhergehenden Ansprüche,
**dadurch gekennzeichnet, dass**
• das Polykondensat ein Polyester ist, wobei das mindestens eine Lösungsmittel einen Wert für die Wasserstoff-Bindungsstärke δ_{H} des Hansen-Löslichkeitsparameters von 2 bis 15 MPa^{0.5}, bevorzugt von 3 bis 13 MPa^{0.5} , besonders bevorzugt von 4 bis 10 MPa^{0.5} und/oder einen Wert für die polare Bindungsstärke δ_{P} des Hansen-Löslichkeits-Parameters von 1 bis 14 MPa^{0.5}, bevorzugt von 2 bis 12 MPa^{0.5}, besonders bevorzugt von 3 bis 10 MPa^{0.5} und/oder einen Wert für die dispersiven Wechselwirkungen δ_{D} von 10 bis 25 MPa^{0.5}, bevorzugt von 12 bis 24 MPa^{0.5} , besonders bevorzugt von 13 bis 22 MPa^{0.5} aufweist,
• das Polykondensat ein Polyamid ist, wobei das mindestens eine Lösungsmittel einen Wert für die Wasserstoff-Bindungsstärke δ_{H} des Hansen-Löslichkeitsparameters von 5 bis 20 MPa^{0.5}, bevorzugt von 6 bis 19 MPa^{0.5} , besonders bevorzugt von 8 bis 19 MPa^{0.5} und/oder einen Wert für die polare Bindungsstärke δ_{P} des Hansen-Löslichkeits-Parameters von 0,5 bis 15 MPa^{0.5}, bevorzugt von 1 bis 14 MPa^{0.5}, besonders bevorzugt von 1,5 bis13 MPa^{0.5} und/oder einen Wert für die dispersiven Wechselwirkungen δ_{D} von12 bis 22 MPa^{0.5}, bevorzugt von 13 bis 20 MPa^{0.5}, besonders bevorzugt von 14 bis 19 MPa^{0.5} aufweist und/oder
• das Polykondensat ein Polycarbonat ist, wobei das mindestens eine Lösungsmittel einen Wert für die Wasserstoff-Bindungsstärke δ_{H} des Hansen-Löslichkeitsparameters von 2 bis15 MPa^{0.5}, bevorzugt von 3 bis13 MPa^{0.5} , besonders bevorzugt von 4 bis 10 MPa^{0.5} und/oder einen Wert für die polare Bindungsstärke δ_{P} des Hansen-Löslichkeits-Parameters von 1 bis 14 MPa^{0.5}, bevorzugt von 2 bis12 MPa^{0.5}, besonders bevorzugt von3 bis 11 MPa^{0.5} und/oder einen Wert für die dispersiven Wechselwirkungen δ_{D} von 14 bis 25 MPa^{0.5}, bevorzugt von 15 bis24 MPa^{0.5} , besonders bevorzugt von 16 bis 22 MPa^{0.5} aufweist und/oder
• das Polykondensat ein Polylactid ist, wobei das mindestens eine Lösungsmittel einen Wert für die Wasserstoff-Bindungsstärke δ_{H} des Hansen-Löslichkeitsparameters von 2 bis 15 MPa^{0.5}, bevorzugt von 3 bis13 MPa^{0.5} , besonders bevorzugt von 3,5 bis 10 MPa^{0.5} und/oder einen Wert für die polare Bindungsstärke δ_{P} des Hansen-Löslichkeits-Parameters von3 bis 25MPa^{0.5}, bevorzugt von 5 bis 22 MPa^{0.5}, besonders bevorzugt von 7 bis 20 MPa^{0.5} und/oder einen Wert für die dispersiven Wechselwirkungen δ_{D} von 14 bis 25 MPa^{0.5}, bevorzugt von 15 bis14 MPa^{0.5} , besonders bevorzugt von16 bis22 MPa^{0.5} aufweist.

4. Verfahren nach dem vorhergehenden Anspruch,
**dadurch gekennzeichnet, dass** das mindestens eine Lösungsmittel ein Dicarbonsäuredialkylester oder ein Gemisch hiervon ist, insbesondere ein Dialkylester, bevorzugt Dimethylester oder Diethylester von Säuren ausgewählt aus der Gruppe bestehend aus Oxalsäure, Malonsäure, Bernsteinsäure, Glutarsäure, Adipinsäure und Mischungen hiervon oder Benzylalkohol, Benzaldehyd, Dimethylsulfoxid und Dimethylformamid sowie Mischungen hiervon und/oder
das mindestens eine Fällmittel ausgewählt ist aus der Gruppe bestehend aus C₅-C₁₇-Kohlenwasserstoffen, bevorzugt technische Alkangemische aus C₁₀-C₁₄-Kohlenwasserstoffen, Wasser und Mischungen hiervon.

5. Verfahren nach einem der vorhergehenden Ansprüche,
**dadurch gekennzeichnet, dass** das mindestens eine Lösungsmittel einen sich vom mindestens einen Fällmittel unterscheidenden Hansen-Parameter aufweist und/oder das mindestens eine Lösungsmittel und das mindestens eine Fällmittel eine Mischungslücke aufweisen.

6. Verfahren nach einem der vorhergehenden Ansprüche,
**dadurch gekennzeichnet, dass**
• das Polykondensat ein Polyester ist und das Verhältnis von Lösungsmittelmenge zu Fällmittelmenge im Bereich von 1:0,02 bis 1:1, bevorzugt im Bereich von 1:0,03 bis 1:0,5, besonders bevorzugt im Bereich von 1:0,05 bis 1:0,2 liegt, und/oder
• das Polykondensat ein Polyamid ist und das Verhältnis von Lösungsmittelmenge zu Fällmittelmenge im Bereich von 1:0,05 bis 1:2 bevorzugt im Bereich von 1:0,07 bis 1:1,25, besonders bevorzugt im Bereich von 1:0,1 bis 1:0,75 liegt und/oder
• das Polykondensat ein Polylactid ist und das Verhältnis von Lösungsmittelmenge zu Fällmittelmenge im Bereich von 1:0,1 bis 1:5, bevorzugt im Bereich von 1:0,25 bis 1:2,5, besonders bevorzugt im Bereich von 1:0,5 bis 1:1,5 liegt und/oder
• das Polykondensat ein Polycarbonat ist und das Verhältnis von Lösungsmittelmenge zu Fällmittelmenge im Bereich von 1:0,1 bis 1:3, bevorzugt im Bereich von 1:0,25 bis 1:2, besonders bevorzugt im Bereich von 1:0,5 bis 1:1,25 liegt.

7. Verfahren nach einem der vorhergehenden Ansprüche,
**dadurch gekennzeichnet, dass** nach Schritt b) der Lösungsmittelgehalt in dem mindestens einen Polykondensat um mind. 0,1 %, bevorzugt mindestens 1% erhöht ist.

8. Verfahren nach einem der vorhergehenden Ansprüche,
**dadurch gekennzeichnet, dass** die mechanische Trennung durch Sedimentieren und/oder Filtrieren und/oder Siebung und/oder Windsichtung erfolgt.

9. Verfahren nach einem der vorhergehenden Ansprüche,
**dadurch gekennzeichnet, dass** die Trocknung bei einer Temperatur von 150 bis 250 °C, bevorzugt von 160 bis 220 °C, besonders bevorzugt von 170 bis 200°C durchgeführt wird und/oder
die Trocknung für einen Zeitraum von 30 bis 600 Minuten, bevorzugt von 45 bis 450 Minuten, besonders bevorzugt von 60 bis 360 Minuten durchgeführt wird und/oder
die Trocknung des zumindest einen Polykondensats unter Vakuum, bevorzugt bei einem Druck von ≤ 500 mbar, bevorzugter ≤ 100 mbar besonders bevorzugt von 1 bis 50 mbar, und/oder unter Zugabe mindestens eines Inertgases erfolgt, wobei bevorzugt das Vakuum nur zeitweise und/oder mehrmals angelegt und/oder die Zugabe des mindestens einen Inertgases nur zeitweise und/oder mehrmals erfolgt,
wobei die Lösemittelrückstände und Fällmittelrückstände des mindestens einen Polykondensats während der Trocknung vorzugsweise auf einen Gehalt von unter 5 % reduziert werden, bevorzugt unter 1 %, besonders bevorzugt unter 0,1 %.

10. Verfahren nach dem vorhergehenden Anspruch,
**dadurch gekennzeichnet, dass** das mindestens eine Inertgas ausgewählt ist aus der Gruppe bestehend aus Stickstoff, Argon, Luft, Kohlenstoffdioxid oder Mischungen hiervon.

11. Verfahren nach einem der vorhergehenden Ansprüche,
**dadurch gekennzeichnet, dass** das Molekulargewicht des zumindest einen Polykondensats um 5 bis 90%, bevorzugt um 10 bis 60%, bezogen jeweils auf das Molekulargewicht des jeweiligen Polykondensats im polymerhaltigen Abfall, erhöht wird.

12. Recycliertes Polykondensat aus der Gruppe der Polyester, Polyamide, Polylactide und Polycarbonate mit einem Molekulargewicht von 80 % bis 120 % eines Virgin-Polykondensats, wobei das recyclierte Polykondensat als Pulver mit einer mittleren Teilchengröße von 20 µm bis 1000 µm, bestimmt nach DIN 66165 vorliegt und das recyclierte Polykondensat einen Lösungsmittelgehalt von maximal 5000 µg/g aufweist.

13. Recycliertes Polykondensat nach Anspruch 12,
**dadurch gekennzeichnet, dass** das Polykondensat ein Molekulargewicht von 95 % bis 105 % des Molekulargewichts eines Virgin-Polykondensats aufweist.

14. Recycliertes Polykondensat nach Anspruch 12 oder 13,
**dadurch gekennzeichnet, dass** das recyclierte Polykondensat durch einen Lösungsmittelgehalt von maximal 1000 µg/g und bevorzugt von 10 bis 500µg/g und/oder das recyclierte Polykondensat als Pulver mit einer mittleren Teilchengröße von 20 µm bis1000 µm, bestimmt nach DIN 66165, vorliegt.

15. Recycliertes Polykondensat nach einem der Ansprüche 12 bis 14 und herstellbar nach dem Verfahren nach einem der Ansprüche 1 bis 11.
